# EUROPEAN PATENT SPECIFICATION

(11) **EP 1 095 796 B1**
(45) Date of publication and mention of the grant of the patent: **02.08.2006**
(21) Application number: 00309436.4
(22) Date of filing: 26.10.2000
(51) Int. Cl.: B60C 15/00, B60C 9/18, B60C 5/12

(54) **Tubeless tyre**
Schlauchloser Reifen
Pneumatique sans chambre à air

(30) Priority: 27.10.1999 JP 30597199
(43) Date of publication of application: 02.05.2001
(73) Proprietor: SUMITOMO RUBBER INDUSTRIES LIMITED, Kobe-shi, Hyogo-ken (JP)
(72) Inventor: Minami, Nobuaki, Nagata-ku, Kobe-ken, Hyogo-ken (JP)
(74) Representative: Manitz, Finsterwald & Partner GbR

(56) References cited:
- EP-A- 0 885 754
- US-A- 4 773 463
- PATENT ABSTRACTS OF JAPAN vol. 008, no. 191 (M-322), 4 September 1984 (1984-09-04) & JP 59 081208 A (YOKOHAMA GOMU KK), 10 May 1984 (1984-05-10)

## Description

The present invention relates to a tubeless tyre capable of achieving a weight reduction without deteriorating tyre performance such as handling performance.

In the laid-open Japanese patent application No. JP-A-8-113007, the present inventor proposed to use, in a carcass ply of a tubeless tyre, a strip of rubberised cords, wherein one side of the strip is covered with a butyl-based rubber compound which comprises preferably more than 60 parts by weight of butyl rubber, but the other side is covered with a non-butyl, diene-based rubber compound. The strip is used such that the side covered with the butyl-based rubber compound faces the tyre cavity or hollow, and each edge thereof is turned up around a bead core in each bead portion from the inside to the outside of the tyre and terminates in the bead portion or lower sidewall portion of the tyre. As a result the conventional inner liner can be omitted to reduce the tyre weight.

However in comparison with the conventional topping rubber i.e. diene-based rubber compounds, such butyl-based rubber compound is low in impact resilience, and as a result, handling performance tends to deteriorate.

Document EP-A-0 885 754 discloses a tubeless pneumatic tyre according to the preamble of claim 1, having a single carcass ply coated with a rubber layer and turned up around the bead portions of the tyre. The turnup portion ends well before the belt edge region of the tyre.

Document US-A-4,773,463 discloses a tyre for a motorcycle in which a turnup portion of a carcass ply overlaps with the belt about 10 mm.

Document Patent Abstracts of Japan JP 59 081208 shows turned up end parts of a carcass ply which are overlapped by a belt such that there is an overlap of more than 10 mm.

In the prior art documents the configuration of the tyre region comprising the end part of the turnup portion of the carcass ply and the belt edge is not yet optimal.

It is therefore an object of the present invention to provide a tubeless tyre in which the sidewall stiffness, and therefore the handling performance, is improved without deteriorating other tyre performances.

This object is achieved by a pneumatic tyre having the features of claim 1.

In a pneumatic tyre according to claim 1 the rigidity of the belt edge region is increased, and the lateral stiffness of the tyre is improved without increasing the tyre weight substantially. As a result, handling performance can be improved.

Embodiments of the present invention will now be described in detail in conjunction with the accompanying drawings:
Fig.1 is a cross sectional view of a tyre according to the present invention;

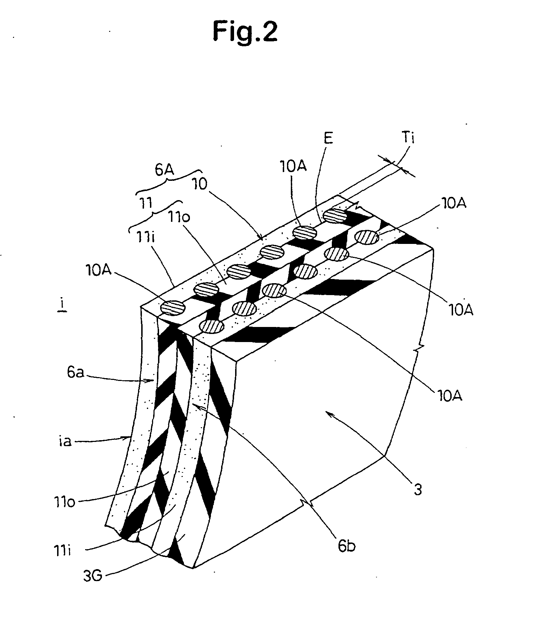

Fig.2 is an enlarged perspective view showing a part of the carcass in the sidewall portion;
Fig.3 is an enlarged cross sectional view showing the belt edge and vicinity thereof;
Fig.4 is an enlarged cross sectional view showing the belt edge and vicinity of another embodiment of the present invention; and
Figs.5A, 5B and 5C are cross sectional views showing the boundary between the first and second rubber compounds.

In the drawings, a tubeless tyre 1 according to the present invention is a radial tyre for passenger cars and comprises a tread portion 2, a pair of sidewall portions 3 and a pair of bead portions 4 each with a bead core 5 therein. The tyre 1 is reinforced by a toroidal carcass 6 extending between the bead portions 4, and a belt 7 disposed radially outside the carcass 6 in the tread portion 2. Further, at least the following rubber components are disposed: a tread rubber 2G disposed radially outside the belt 7 in the tread portion 2; a sidewall rubber 3G disposed axially outside the carcass 6 in each of the sidewall portions 3; and a clinch rubber 4G disposed axially outside the carcass 6 in each of the bead portions 4. The clinch rubber 4G extends radially outwards from the bead bottom, and the radially outer tapered edge portion thereof is spliced with the radially inner tapered edge portion of the sidewall rubber 3G. The sidewall rubber 3G extends radially outwardly towards the tread portion 2.

The above-mentioned carcass 6 is composed of a single ply 6A of cords 10A arranged radially at an inclination angle of 75 to 90 degrees with respect to the tyre equator C. For the carcass cords 10A, organic fibre cords, e.g. polyester, nylon, rayon, aromatic polyamide, vinylon and the like can be used. But, it is also possible to use steel cords.

The carcass ply 6A consists of a toroidal main portion 6a and a pair of turnup portions 6b. The toroidal main portion 6a extends continuously between the bead portions 4 through the tread portion 2 and sidewall portions 3. Each turnup portion 6b is turned up around the bead core 5 in one of the bead portions 4 from the inside to the outside of the tyre.

Between the main portion 6a and turnup portion 6b in each of the bead portions 4, a radially outwardly tapering bead apex 9 is disposed. The bead apex 9 is made of hard rubber having a JIS hardness of from 65 to 95, preferably 70 to 90, measured with a durometer type-A according to Japanese Industrial Standard K-6253. The bead apex 9 extends radially outwardly from the bead core 5, and the radially outer end 9e thereof is preferably positioned at a height Ha in the range of from 0.15 to 0.55 times, more preferably 0.15 to 0.30 times the tyre section height H, each from the bead base line BL.

Here, the "bead base line" is defined as an axial line drawn at the rim diameter of a wheel rim for the tyre.

The tyre section height H is the radial distance from the bead base line BL to the radially outermost point of the tyre under such a standard condition that the tyre is mounted on a standard wheel rim and inflated to a standard inner pressure but loaded with no tyre load.

In the present invention, the tyre 1 is not provided on the inside of the carcass 6 with an inner liner which is conventionally used in tubeless tyres. Thus, the inner surface of the main portion 6a faces the tyre hollow (i) and forms all or most of the inner surface (ia) of the tyre.

The inside of the carcass ply main portion 6a facing the tyre hollow (i) is coated with a first rubber compound lli and the outside thereof is coated with a second rubber compound 11o. The first rubber compound lli comprises butyl rubber and/or derivative but the second rubber compound llo comprises neither butyl rubber nor derivative.

The carcass ply 6A is made of a strip of rubberised carcass cords 10A arranged side by side.

In the embodiments shown in the figures, for the reason of production efficiency, one side of the carcass ply 6A including the main portion 6a and turnup portions 6b is coated with the first rubber compound 11i, and the other side is coated with the second rubber compound llo. It is however, possible or preferable that only the inside of the main portion 6a is rubberised with the first rubber compound. That is to say, the outside of the main portion 6a and both the inside and outside of each of the turnup portions 6b are rubberised with the second rubber compound.

The first rubber compound lli comprises butyl rubber (IIR) and/or derivative as a part of its rubber base material. For the rest of the rubber base material, diene rubber, e.g. natural rubber (NR), butadiene rubber (BR), styrene butadiene rubber (SBR) and the like may be used. Incidentally, the butyl rubber (IIR) is a copolymer of isobutylene and a small amount of isoprene. The derivative may be halogenated butyl rubber, e.g. chlorinated butyl rubber, brominated butyl rubber and the like.

The total content of the butyl rubber (IIR) and/or derivative, based on 100 parts by weight of rubber base material, is at least 10 parts by weight (phr), preferably more than 20 phr, more preferably more than 30 phr. However, it is preferably limited to under 50 phr, more preferably under 40 phr. Hereinafter, such rubber compounds are sometimes called butyl-containing rubber.

On the other hand, the second rubber compound llo comprises, based on 100 parts by weight of rubber base material, at least 90 parts by weight (phr), preferably 100 phr of diene rubber. And it comprises neither butyl rubber nor derivative. Hereinafter, such diene-based rubber compounds are sometimes called non-butyl rubber.

The butyl-containing rubber and non-butyl rubber comprise, in addition to the rubber base material, various additives such as reinforce agents, e.g. carbon black, vulcanising agent, vulcanisation accelerator, softener and the like.

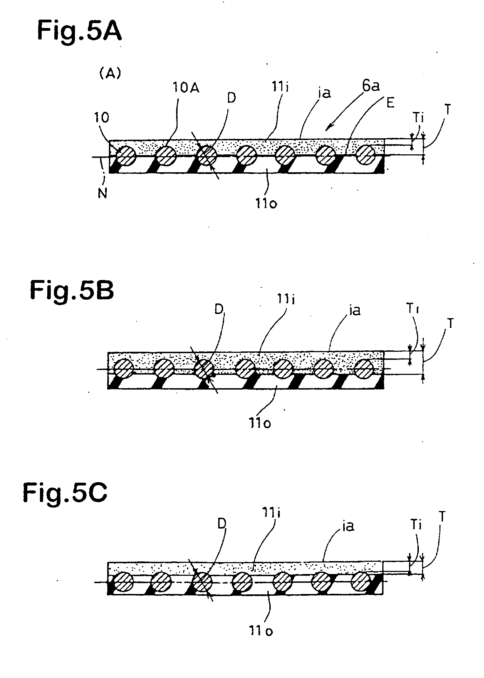

In the carcass ply main portion 6a, a rubber thickness Ti of the first rubber compound lli measured from the tyre inner surface (ia) to the carcass cords 10A is preferably set in the range of from 0.2 to 1.0 mm, more preferably 0.3 to 0.8 mm. Further, in view of handling performance and ride comfort and prevention of carcass cord separation from rubber, it is preferable that a rubber thickness T of the first rubber compound lli measured from the tyre inner surface (ia) to the boundary E between the first and second rubber compounds is not more than 1.5 mm and not more than Ti+0.5D as shown in Fig.5A and Fig.5C, wherein D is the diameter of the carcass cord. If as shown in Fig.5B the rubber thickness T is more than Ti+0.5D but less than Ti+D, it may be permitted.

In this embodiment, the above-mentioned belt 7 is composed of a radially inner wide ply 7A and a radially outer narrow ply 7B.

Each ply 7A, 7B is made of steel cords 13A laid parallel with each other, and both sides thereof are rubberised with a third rubber compound 14. For the third rubber compound 14, a non-butyl, diene-based rubber compound similar to or same as the second rubber compound 11o is used.

The radially outer edge 6be of the carcass ply turnup portion 6b is terminated within a belt edge region Be which is defined as extending 20 mm axially inwards and 30 mm axially outwards along the carcass ply main portion 6a from a point Q. The point Q is an intersecting point between the carcass ply main portion 6a (thickness centre line is used) and a straight line M drawn perpendicularly to the carcass ply main portion 6a from the axial outer edge 7e of the belt 7.

If the carcass ply turnup portion 6b extends axially inwardly over the belt edge region Be, the tyre weight reduction is spoiled. If the turnup portion 6b is terminated before the belt edge region Be, the lateral stiffness of the tyre is not increased, and tyre performance is not improved.

More preferably, the outer edge 6be is terminated within a region extending 15 mm axially inwards and 20 mm axially outwards from the point Q. When defining the intersecting point Q, the tyre is mounted on a standard wheel rim, and normally inflated to a standard pressure, but loaded with not tyre load.

In the embodiments shown in the figures, the radially outer edge 6be of the carcass ply turnup portion 6b is terminated beneath the belt edge 7, and the end thereof is positioned axially inside the intersecting point Q.

In order to prevent the first rubber compound on outside of the turnup portion 6b from coming into contact with the belt 7, that is, the belt cords 13A and/or topping rubber (third rubber compound 14), a separator made of non-butyl rubber is inserted therebetween.

The space between the first rubber compound lli and the belt 7 which space is provided by the separator is set in the range of not less than 1 mm, preferably not less than 1.5 mm, more preferably 1.5 to 3.5 mm. In this embodiment, the minimum space or distance K occurs at the outer edge 6be of the carcass ply turnup portion 6b.

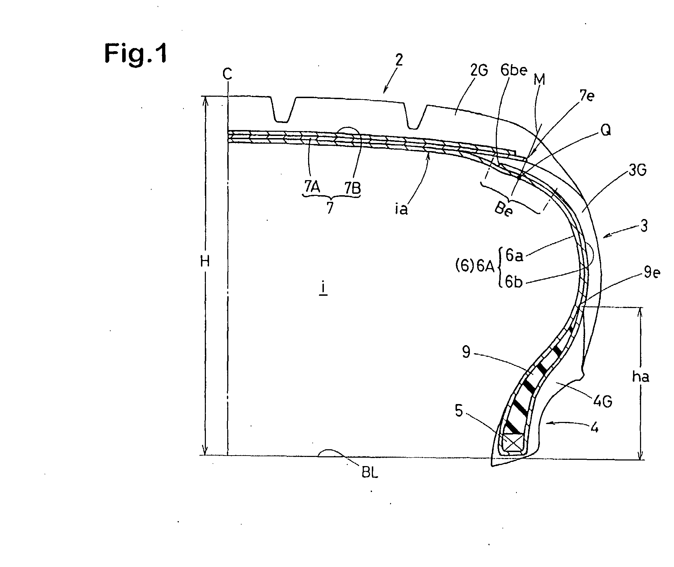

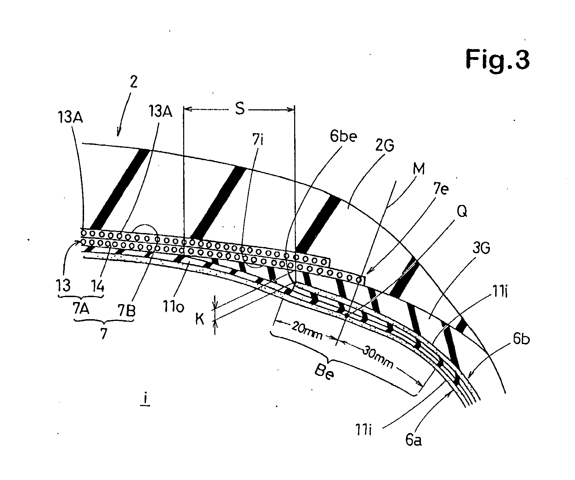

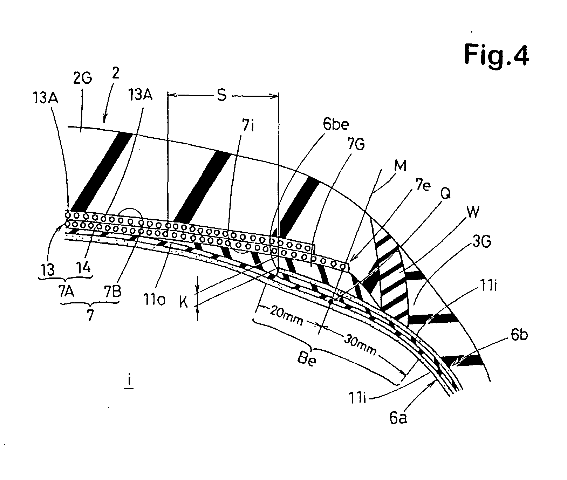

For the separator, the sidewall rubber 3G is utilised in the embodiment shown in Figs.1 and 3. But, in the case of Fig.4, a cushion rubber 7G separate from the sidewall rubber 3G is utilised.

In Fig.3, the sidewall rubber 3G is extended to beneath the tread rubber 2G. From the vicinity of the axial edge of the tread rubber 2G, the sidewall rubber 3G tapers towards its axial end, and extends beyond the edge 6be of the turnup portion 6b axially inwardly by a distance S of from 5 to 20 mm, preferably 5 to 15 mm.

In Fig.4, the sidewall rubber 3G is terminated before the tread rubber 2G and, on the axially outside of the belt edge 7e, they are connected indirectly through a wing rubber W, while keeping a substantially constant distance between the bonded surfaces of the tread rubber 2G and sidewall rubber 3G. The cushion rubber 7G tapers axially inwards and axially outwards from the belt edge, and similarly to the sidewall rubber shown in Fig.3 it extends beyond the edge 6be of the turnup portion 6b axially inwardly by the distance S. On the axially outside of the belt edge 7e, the cushion rubber 7G abuts on the tread rubber 2G and ends at the wing rubber W not to abut on the wing rubber W.

In either case, the first rubber compound 11i on the outside of the turnup portion 6b comes into contact with the sidewall rubber 2G or cushion rubber 7G but the belt 7.

The sidewall rubber 3G, cushion rubber 7G and wing rubber W in this embodiment are diene-based rubber compounds comprising neither butyl rubber nor derivative.

### Comparison Tests

Tubeless tyres of size 195/65R14 (rim size 6JJX14) for passenger cars having the basic structure shown in Fig.1 and Fig.3 were made and tested as follows.

### 1) Tyre weight

The tyre weight is indicated by an index based on Ref. 3 being 100.

### 2) Air leak test

The test tyre mounted on a standard wheel rim was inflated to a standard inner pressure (200kPa) and put into a hot chamber at 80 deg.C for fifteen days. Then the tyre inner pressure was measured to obtain the percentage decrease in the pressure. In the Table, the reciprocal of the obtained percentage is indicated using an index based on Ref. 3 being 100. The larger the index, the better the airtightness.

### 3) Handling performance and Ride comfort test

A 2000cc FF passenger car provided on all the wheels with test tyres was run on a test course, and the handling performance was evaluated into ten ranks by the test driver based on the steering responsiveness, steering stability, and road grip. Further, on a rough road, ride comfort was evaluated into ten ranks. The larger the rank number, the better the performance.

### 4) Production efficiency

The necessary time for building a green tyre was clocked and it is indicated by an index based on Ref. 3 being 100. The smaller the index, the better the production efficiency.

The test results together with tyre specifications are shown in Table 1.

From the test results, it was confirmed that Example tyres according to the present invention were improved in handling performance, while maintaining the reduced tyre weight, and without deteriorating the airtightness, durability, ride comfort, and the like.

The present invention can be applied to not only passenger car tyres but also motorcycle tyres, light truck tyres and the like.

**Table 1**

| Tyre | Ref.1 | Ref.2 | Ref.3 | Ex.1 | Ex.2 | Ex.3 | Ex.4 | Ex.5 | Ex.6 | Ex.7 |
|---|---|---|---|---|---|---|---|---|---|---|
| Inner liner | none | present | present | none | none | none | none | none | none | none |
| Carcass *1 | | | | | | | | | | |
| Topping rubber *2 | | | | | | | | | | |
| Inside *3 | A | B | B | A | A | A | A | A | A | A |
| Outside *4 | B | B | B | B | B | B | B | B | B | B |
| Turnup portion | | | | | | | | | | |
| Position of edge 6be (mm) *5 | -50. | 10 | -50 | 20 | 10 | 0 | -10 | -20 | -30 | 20 |
| Min. distance K (mm) | -- | 5 | -- | 1 | 1.5 | 2 | - | -- | -- | 0.5 |
| Separator | | | | | | | | | | |
| Distance S (mm) | - | 15 | - | 5 | 15 | 25 | 35 | 45 | 55 | 5 |
| Tyre weight | 93 | 103 | 100 | 97 | 96 | 95 | 94 | 93 | 92 | 97 |
| Test results | | | | | | | | | | |
| Air leak | 100 | 102 | 100 | 105 | 104 | 103 | 102 | 101 | 100 | 105 |
| Handling performance | 5.5 | 7.5 | 6 | 7.5 | 7 | 6.5 | 6.5 | 6 | 6 | 7.5 |
| Ride comfort | 6.5 | 5.5 | 6 | 5.5 | 6 | 6.5 | 6.5 | 7 | 7 | 7.5 |
| Durability | 100 | 100 | 100 | 100 | 100 | 100 | 100 | 100 | 100 | 90 |
| Production efficiency | 90 | 100 | 100 | 90 | 90 | 90 | 90 | 90 | 90 | 90 |

| | | | | | | | | | | |
|---|---|---|---|---|---|---|---|---|---|---|
| *1 The carcass comprising a single ply of polyester cords (1100 dtex/2) - cord count 61/5cm. | | | | | | | | | | |
| *2 see Table 2 | | | | | | | | | | |
| *3 This means the inside of the main portion and the outside of the turnup portions. | | | | | | | | | | |
| *4 This means the outside of the main portion and the inside of the turnup portions. | | | | | | | | | | |
| *5 The length measured axially inwards from the point Q. Thus, minus sign indicates axially outward. | | | | | | | | | | |

**Table 2 (parts by weight)**

| Compound | A | B |
|---|---|---|
| Rubber base material | | |
| Halogenated butyl | 30 | |
| Natural rubber | 70 | 67 |
| Styrene butadiene rubber | - | 33 |
| Additives | | |
| Carbon black | 50 | 57 |
| Processing oil | - | 8.5 |
| Sulfur | 3 | 1.5 |
| Hydrozincite | 5 | 3 |
| Vulcanisation accelerator | 1 | 1 |
| Stearic acid | 2 | 1.5 |

## Claims

1. A tubeless tyre comprising a tread portion (2), a pair of sidewall portions (3), a pair of bead portions (4), a carcass (6) composed of a single ply of cords (10A), a belt (7) disposed radially outside the carcass (6) in the tread portion (2), said single ply (6) comprising a main portion (6A) extending between the bead portions (4) through the tread portion (2) and sidewall portions (3), and a pair of turnup portions (6b) each turned up around a bead core (5) in one of the bead portions (4) from the inside to the outside of the tyre, wherein an inside of said carcass ply main portion (6A) facing a tyre hollow is covered with a first topping rubber compound (11i), said first topping rubber compound (11i) comprising, based on 100 parts by weight of rubber base material, at least 10 parts by weight of butyl rubber and/or derivative, **characterised in that** the outer edge (6be) of each of the carcass ply turnup portions (6b) is terminated within the belt edge region (Be) extending 20 mm axially inwards and 30 mm axially outwards along the carcass ply main portion from an intersecting point (Q) which is defined as of the ply main portion (6a) with a straight line (M) drawn from each of axial outer edges (7e) of the belt (7) perpendicularly to the carcass ply main portion (6a) and **in that** a separator (36,76) made of non-butyl rubber is disposed between said outer edge (6be) and the belt (7) to prevent the first topping rubber compound (11i) from contacting with the belt (7), the thickness of said separator is at least 1 mm between the outer edge and the belt.

2. A tubeless tyre according to claim 1, **characterised in that** said separator disposed between the outer edge and the belt is an edge portion of a sidewall rubber (3G) disposed axially outside the carcass (6) in each said sidewall portions (3).

3. A tubeless tyre according to claim 1, **characterised in that** said separator disposed between the outer edge and the belt is a cushion rubber (7G) separate from a sidewall rubber (3G) disposed axially outside the carcass (6) in each said sidewall portions (3).

4. A tubeless tyre according to any of claims 1 to 3, **characterised in that** only the inside of the carcass ply main portion (6a) is rubberised with the first topping rubber compound (11i), and the outside of the carcass ply main portion (6a) and the inside and outside of each of the carcass ply turnup portions (6b) are rubberised with a second rubber compound (11o) comprising neither butyl rubber nor derivative.

5. A tubeless tyre according to claim 1, 2, or 3, **characterised in that** the inside of the carcass ply main portion (6a) and the outside of each of the carcass ply turnup portions (6b) are rubberised with the first topping rubber compound (11i), and the outside of the carcass ply main portion (6a) and the inside of each of the carcass ply turnup portions (6b) are rubberised with a second rubber compound (11o) comprising neither butyl rubber nor derivative.

## Patentansprüche

1. Schlauchloser Reifen, umfassend einen Laufflächenabschnitt (2), ein Paar Seitenwandabschnitte (3), ein Paar Wulstabschnitte (4), eine Karkasse (6), die aus einer einzigen Lage aus Korden (10A) gebildet ist, einen Gürtel (7), der radial außerhalb der Karkasse (6) in dem Laufflächenabschnitt (2) angeordnet ist, wobei die einzige Lage (6) einen Hauptabschnitt (6A), der sich zwischen den Wulstabschnitten (4) durch den Laufflächenabschnitt (2) und die Seitenwandabschnitte (3) hindurch erstreckt, und ein Paar Umschlagabschnitte (6b) umfasst, die jeweils um einen Wulstkern (5) in einem der Wulstabschnitte (4) von der Innenseite zur Außenseite des Reifens umgeschlagen sind, wobei eine Innenseite des Karkasslagen-Hauptabschnitts (6A), die einem Reifenhohlraum zugewandt ist, mit einer ersten Gummierungmischung (11i) bedeckt ist, wobei die erste Gummierungsmischung (11i) auf der Basis von 100 Gewichtsteilen von Kautschukbasismaterial mindestens 10 Gewichtsteile Butylkautschuk und/oder ein Derivat umfasst, **dadurch gekennzeichnet, dass** die äußere Kante (6be) von jedem der Karkassenlagen-Umschlagabschnitte (6b) in dem Gürtelkantenbereich (Be) endet, der sich 20 mm axial nach innen und 30 mm axial nach außen entlang des Karkasslagen-Hauptabschnitts von einem Schnittpunkt (Q) erstreckt, der definiert ist als Schnittpunkt des Lagen-Hauptabschnitts (6a) mit einer geraden Linie (M), die von jeder axial äußeren Kante (7e) des Gürtels (7) senkrecht zum Karkasslagen-Hauptabschnitt (6a) gezogen ist, und dass eine Trennlage (3G, 7G), die aus einem Nicht-Butylkautschuk hergestellt ist, zwischen der äußeren Kante (6be) und dem Gürtel (7) angeordnet ist, um zu verhindern, dass die erste Gummierungsmischung (11i) den Gürtel (7) berührt, wobei die Dicke der Trennlage zwischen der äußeren Kante und dem Gürtel mindestens 1 mm beträgt.

2. Schlauchloser Reifen nach Anspruch 1, **dadurch gekennzeichnet, dass** die Trennlage, die zwischen der äußeren Kante und dem Gürtel angeordnet ist, ein Kantenabschnitt eines Seitenwandgummis (3G) ist, der axial außerhalb der Karkasse (6) in jedem Seitenwandabschnitt (3) angeordnet ist.

3. Schlauchloser Reifen nach Anspruch 1, **dadurch gekennzeichnet, dass** die Trennlage, die zwischen der äußeren Kante und dem Gürtel angeordnet ist, ein Polstergummi (7G) ist, der von einem Seitenwandgummi (3G) getrennt ist, welcher axial außerhalb der Karkasse (6) in jedem Seitenwandabschnitt (3) angeordnet ist.

4. Schlauchloser Reifen nach einem der Ansprüche 1 bis 3, **dadurch gekennzeichnet, dass** nur die Innenseite des Karkasslagen-Hauptabschnitts (6a) mit der ersten Gummierungsmischung (11i) gummiert ist, und die Außenseite des Karkasslagen-Hauptabschnitts (6a) und die Innenseite und Außenseite von jedem der Karkasslagen-Umschlagabschnitte (6b) mit einer zweiten Gummimischung (11o) gummiert sind, die weder Butylkautschuk noch ein Derivat umfasst.

5. Schlauchloser Reifen nach Anspruch 1, 2 oder 3, **dadurch gekennzeichnet, dass** die Innenseite des Karkasslagen-Hauptabschnitts (6a) und die Außenseite von jedem der Karkasslagen-Umschlagabschnitte (6b) mit einer ersten Gummierungsmischung (11i) gummiert sind, und die Außenseite des Karkasslagen-Hauptabschnitts (6a) und die Innenseite von jedem der Karkasslagen-Umschlagabschnitte (6b) mit einer zweiten Gummimischung (11o) gummiert sind, die weder Butylkautschuk noch ein Derivat umfasst.

## Revendications

1. Bandage pneumatique sans chambre à air comprenant une partie (2) de bande de roulement, une paire de parties (3) de flanc, une paire de parties (4) de talon, une carcasse (6) composée d'un pli unique de câblés (10A), une nappe d'armature (7) disposée radialement à l'extérieur de la carcasse (6) dans la partie (2) de bande de roulement, ledit pli unique (6) comprenant une partie principale (6A) qui s'étend entre les parties (4) de talon par l'intermédiaire de la partie (2) de bande de roulement et les parties (3) de flanc, et une paire de parties relevées (6B) chacune relevée autour d'une tringle (5) dans une des parties (4) de talon de l'intérieur à l'extérieur du bandage pneumatique, où un intérieur de ladite partie principale (6A) de pli de carcasse faisant face à un creux de bandage pneumatique est recouvert d'un premier composé de finition à base de caoutchouc (11i), ledit premier composé de finition à base de caoutchouc (11i) comprenant, sur la base de 100 parties en poids d'un matériau à base de caoutchouc, au moins 10 parties en poids de butylcaoutchouc et,/ou d'un dérivé, **caractérisé en ce que** en que le bord externe (6be) de chacune des parties relevées (6b) de pli de carcasse se termine à l'intérieur de la région de bord (Be) de nappe d'armature qui s'étend axialement sur 20 mm vers l'intérieur et axialement sur 30 mm vers l'extérieur le long de la partie principale de pli de carcasse depuis un point d'intersection (Q) qui est défini comme étant celui de la partie principale (6A) de pli avec une ligne droite (M) tracée à partir de chacun des bords externes axiaux (7e) de la nappe d'armature (7) de manière perpendiculaire par rapport à la partie principale (6a) de pli de carcasse et **en ce qu'**un séparateur (36, 76) qui n'est pas fabriqué à partir d'un butylcaoutchouc est disposé entre ledit bord externe (6be) et la nappe d'armature (7) pour empêcher le premier composé de finition à base de caoutchouc (11i) de venir en contact avec la nappe d'armature (7), l'épaisseur dudit séparateur étant d'au moins 1 mm entre le bord externe et la nappe d'armature.

2. Bandage pneumatique sans chambre à air selon la revendication 1, **caractérisé en ce que** ledit séparateur disposé entre le bord externe et la nappe d'armature est une partie de bord d'un caoutchouc de flanc (3G) disposé axialement à l'extérieur de la carcasse (6) dans chacune desdites parties (3) de flanc.

3. Bandage pneumatique sans chambre à air selon la revendication 1, **caractérisé en ce que** ledit séparateur disposé entre le bord externe et la nappe d'armature est un caoutchouc d'amortissement (7G) séparé d'un caoutchouc de flanc (3G) disposé axialement à l'extérieur de la carcasse (6) dans chacune desdites parties (3) de flanc.

4. Bandage pneumatique sans chambre à air selon l'une quelconque des revendications 1 à 3, **caractérisé en ce que** seul l'intérieur de la partie principale (6a) de pli de carcasse est caoutchouté avec le premier composé de finition à base de caoutchouc (11i), et l'extérieur de la partie principale (6a) de pli de carcasse et l'intérieur et l'extérieur de chacune des parties relevées (6b) de pli de carcasse sont caoutchoutés avec un second composé à base de caoutchouc (11o) ne comprenant ni un butylcaoutchouc ni un dérivé.

5. Bandage pneumatique sans chambre à air selon la revendication 1, 2, ou 3, **caractérisé en ce que** l'intérieur de la partie principale (6a) de pli de carcasse et l'extérieur de chacune des parties relevées (6b) de pli de carcasse sont caoutchoutés avec le premier composé de finition (11i) à base de caoutchouc, et l'extérieur de la partie principale (6a) de pli de carcasse et l'intérieur de chacune des parties relevées (6b) de pli de carcasse sont caoutchoutés avec un second composé à base de caoutchouc (11o) ne comprenant ni un butylcaoutchouc ni un dérivé.
